# EUROPÄISCHE PATENTSCHRIFT

(11) **EP 2 621 193 B1**
(45) Veröffentlichungstag und Bekanntmachung des Hinweises auf die Patenterteilung: **14.08.2019**
(21) Anmeldenummer: 12190110.2
(22) Anmeldetag: 26.10.2012
(51) Int. Cl.: H04Q 9/00

(54) **Vorrichtung zur Übertragung von Sensordaten**
Device for transmitting sensor data
Dispositif de transmission de données de capteur

(30) Priorität: 27.01.2012 DE 102012201170
(43) Veröffentlichungstag der Anmeldung: 31.07.2013
(73) Patentinhaber: Dr. Johannes Heidenhain GmbH, 83301 Traunreut (DE)
(72) Erfinder: Kreuzer, Stephan, Dr., 83362 Surberg-Ettendorf (DE)

(56) Entgegenhaltungen:
- WO-A1-2007/004178
- WO-A1-2010/069664
- DE-A1- 10 306 231

## Beschreibung

Die Erfindung betrifft eine Vorrichtung zur Übertragung von Sensordaten nach Anspruch 1. Insbesondere können mittels einer erfindungsgemäßen Vorrichtung Messwerte eines Sensors unter Verwendung einer Schnittstellenverbindung zwischen einem Messgerät und einem Steuergerät zur ebendiesem Steuergerät übertragen werden.

In der Automatisierungstechnik werden vermehrt Messgeräte eingesetzt, die digitale Messwerte zur Verfügung stellen. Im Bereich der numerischen Steuerungen, die beispielsweise zur Steuerung von Werkzeugmaschinen eingesetzt werden, gilt das besonders für Positionsmessgeräte zur Messung von linearen oder rotatorischen Bewegungen. Positionsmessgeräte, die digitale Messwerte generieren, werden als absolute Positionsmessgeräte bezeichnet.

Für die Übertragung der absoluten Positionswerte kommen hauptsächlich serielle Datenschnittstellen zum Einsatz, da diese mit nur wenigen Datenübertragungsleitungen auskommen und trotzdem hohe Datenübertragungsraten aufweisen. Besonders vorteilhaft sind hier die sogenannten synchronseriellen Schnittstellen, die eine uni- oder bidirektionale Datenleitung und eine Taktleitung aufweisen. Die Übertragung von Datenpaketen über die Datenleitung erfolgt synchron zu einem Taktsignal auf der Taktleitung. In der Automatisierungstechnik hat sich eine Vielzahl von digitalen Standardschnittstellen durchgesetzt, populäre Vertreter für synchron-serielle Schnittstellen sind beispielsweise die EnDat-Schnittstelle der Anmelderin, eine weitere ist unter der Bezeichnungen SSI bekannt. Daneben sind auch noch asynchrone serielle Schnittstellen wie beispielsweise Hiperface verbreitet.

Die SSI-Schnittstelle wird in der EP0171579A1 beschrieben. Es handelt sich hierbei um eine synchron-serielle Datenschnittstelle mit einer unidirektionalen Daten- und einer unidirektionalen Taktleitung. Das Auslesen von Positionswerten von einem Positionsmessgerät erfolgt hier synchron zu einem Taktsignal auf der Taktleitung.

Die EP0660209B2 beschreibt dagegen die Grundlage der EnDat-Schnittstelle der Anmelderin. Bei dieser handelt es sich ebenfalls um eine synchron-serielle Schnittstelle, die jedoch neben der unidirektionalen Taktleitung eine bidirektionale Datenleitung aufweist. Dadurch ist eine Übertragung von Daten in beide Richtungen - von der numerischen Steuerung zum Positionsmessgerät und vom Positionsmessgerät zur numerischen Steuerung - möglich. Die Datenübertragung erfolgt auch hier synchron zu einem Taktsignal auf der Taktleitung.

Darüber hinaus besteht häufig der Wunsch, neben den Daten, die im Messgerät erfasst oder berechnet werden, auch Daten, die von externen Geräten oder Sensoren generiert werden, über die bestehende Schnittstellenverbindung, beispielsweise zwischen Positionsmessgerät und numerischer Steuerung, zu übertragen.

So schlägt die DE102006041056B4 vor, einen Drehgeber mit zusätzlichen Schnittstellen auszustatten, an die externe Sensoren angeschlossen werden können, wobei die Sensordaten im Geber verarbeitet, sowie über eine Busschnittstelle zu einer Steuerung übertragen werden können.

Die DE10306231A1 beschreibt eine Zwischenbaugruppe, an die einerseits Peripheriegeräte, z.B. Sensoren, angeschlossen werden können und die andererseits mittels einer Kommunikationsschnittstelle an eine Positionsmesseinrichtung angeschlossen werden kann. Die Positionsmesseinrichtung wiederum kann die Sensordaten verarbeiten und/oder über eine Schnittstellenverbindung in Richtung einer numerischen Steuerung ausgeben.

Beide Varianten erfordern wenigstens eine zusätzliche Schnittstelle am Drehgeber, die darüber hinaus auch im eingebauten Zustand zugänglich sein muss.

Es ist Aufgabe der Erfindung, eine Möglichkeit zu schaffen, Sensorsignale über eine Schnittstellenverbindung zwischen einem Messgerät und einem Steuergerät zu ebendiesem Steuergerät zu übertragen, ohne das Messgerät zu modifizieren.

Diese Aufgabe wird gelöst durch eine Vorrichtung nach Anspruch 1. Vorteilhafte Details der Vorrichtung ergeben sich aus den von Anspruch 1 abhängigen Ansprüchen.

Es wird nun eine Vorrichtung zur Manipulation von Schnittstellensignalen vorgeschlagen, mit
- einer Slave-Schnittstelle, die an eine Master-Schnittstelle eines Steuergeräts anschließbar ist,
- einer Master-Schnittstelle, die an eine Slave-Schnittstelle eines Messgeräts anschließbar ist,
- wenigstens einer Sensorschnittstelle, an die ein Sensor anschließbar ist und
- einer Schaltungsanordnung, umfassend eine Manipulationseinheit und eine Protokolleinheit,
   wobei
- der Manipulationseinheit ein Master-Dateneingangssignal der Master-Schnittstelle und ein Sensor-Datenausgangssignal zugeführt sind und sie ein Slave-Datenausgangssignal zur Slave-Schnittstelle ausgibt und
- der Protokolleinheit wenigstens ein protokollrelevantes Schnittstellensignal der Slave-Schnittstelle oder der Master-Schnittstelle, sowie ein Sensor-Datensignal der Sensorschnittstelle zugeführt sind und von der Protokolleinheit aus dem Sensor-Datensignal das Sensor-Datenausgangssignal generierbar ist und anhand von Manipulationsregeln und dem wenigstens einen protokollrelevanten Schnittstellensignal auswählbar ist, wann die Manipulationseinheit als Slave-Datenausgangssignal das Master-Dateneingangssignal der Master-Schnittstelle oder das Sensor-Datenausgangssignal ausgibt.

Weitere Vorteile sowie Einzelheiten der vorliegenden Erfindung ergeben sich aus der nachfolgenden Beschreibung anhand der Figuren. Dabei zeigt
- Figur 1: eine erfindungsgemäße Vorrichtung, die zwischen einem Steuergerät und einem Positionsmessgerät angeordnet ist,
- Figur 2: ein Blockschaltbild einer Schaltungsanordnung, die in einer erfindungsgemäßen Vorrichtung enthalten ist und
- Figur 3: eine vereinfachte Datenübertragungssequenz zur Veranschaulichung der Funktionsweise einer erfindungsgemäßen Vorrichtung.

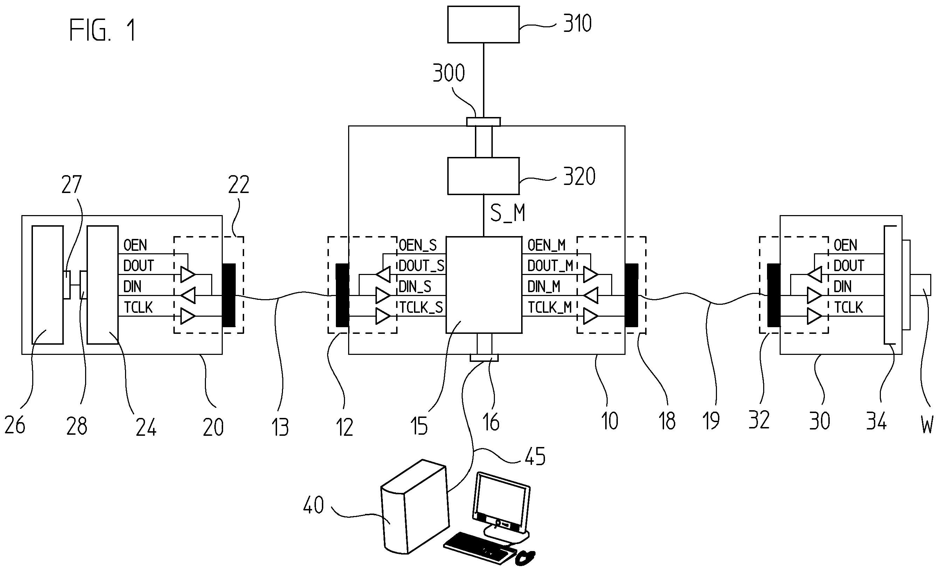

Figur 1 zeigt eine Vorrichtung 10 zur Manipulation von Schnittstellensignalen, die zwischen einem Steuergerät 20 und einem Messgerät 30 angeordnet ist. Das Steuergerät 20 kann ein beliebiges Gerät der Automatisierungstechnik oder Antriebstechnik sein, das wenigstens eine serielle Schnittstelle aufweist, die geeignet ist, mit einem an die Schnittstelle angeschlossenen Messgerät zu kommunizieren. Beispiele hierfür sind Positionsanzeigen, Numerische Steuerungen (NC) und Speicherprogrammierbare Steuerungen (SPS). In den folgenden Ausführungsbeispielen kommt als Steuergerät 20 stellvertretend eine Numerische Steuerung 20 zum Einsatz. Bei dem Messgerät handelt es sich insbesondere um ein Positionsmessgerät 30, beispielsweise zur Messung des Drehwinkels und/oder der Anzahl zurückgelegter Umdrehungen einer Welle W.

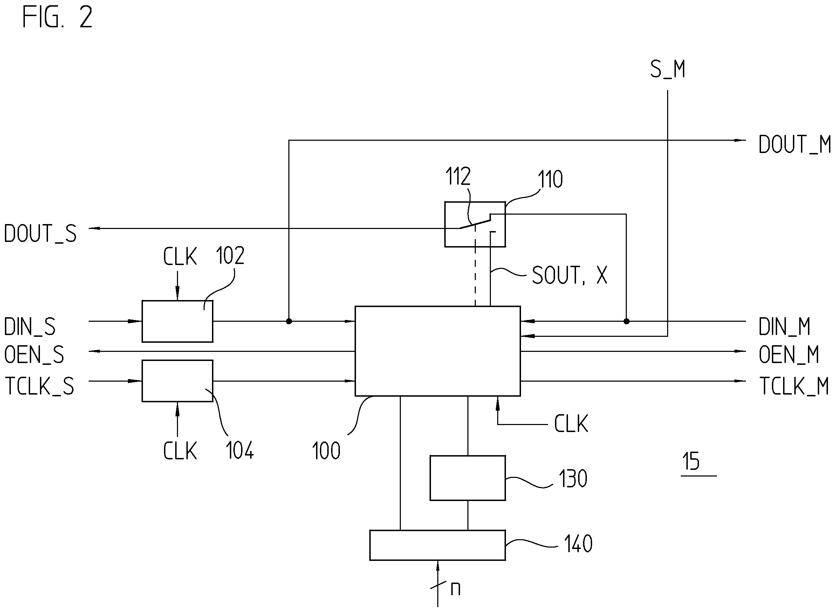

Die Vorrichtung 10 umfasst für den Datenaustausch mit der Numerischen Steuerung 20 eine Slave-Schnittstelle 12, die mittels eines ersten Schnittstellenkabels 13 mit einer Master-Schnittstelle 22 eines Schnittstellencontrollers 24 der Numerischen Steuerung 20 verbunden ist. Weiter umfasst die Vorrichtung eine Master-Schnittstelle 18, die mittels eines zweiten Schnittstellenkabels 19 mit einer Slave-Schnittstelle 32 des Positionsmessgerätes 30 verbunden ist. Zentrale Einheit der Vorrichtung 10 ist eine Schaltungsanordnung 15, die Schnittstellensignale verarbeitet. Der Aufbau der Schaltungsanordnung 15 wird unten in Verbindung mit Figur 2 näher beschrieben.

Die Schnittstellenkabel und die Schnittstellen sind in üblicher Weise mit geeigneten Steckverbindern ausgestattet, so dass eine erfindungsgemäße Vorrichtung auch bei fertig installierten Automatisierungsanlagen, bzw. Werkzeugmaschinen, einfach zwischen die Numerische Steuerung 20 und das Positionsmessgerät 30 eingeschaltet werden kann, indem beispielsweise die Verbindung zwischen Master-Schnittstelle 22 der Numerischen Steuerung 20 und Slave-Schnittstelle 32 des Positionsmessgeräts 30 getrennt und je eine Verbindung zwischen Master-Schnittstelle 22 der Numerischen Steuerung 20 mit der Slave-Schnittstelle 12 der Vorrichtung 10, sowie der Slave-Schnittstelle 32 des Positionsmessgeräts 30 und der Master-Schnittstelle 18 der Vorrichtung 10 hergestellt wird. Der Vollständigkeit halber sei auch erwähnt, dass über die Schnittstellenkabel üblicherweise auch die Stromversorgung des Positionsmessgeräts 30 erfolgt und eine entsprechende Verbindung in der Vorrichtung 10 hergestellt wird (nicht dargestellt). Diese Stromversorgung kann auch für den Betrieb der Vorrichtung 10 herangezogen werden.

Die Schnittstellen können weiter in bekannter Weise Treiber- und Empfängerbausteine umfassen, beispielsweise um Schnittstellensignale, die als einfache, massebezogene digitale Signale in der Numerischen Steuerung 20, der Vorrichtung 10 und dem Positionsmessgerät 30 erzeugt und verarbeitet werden, in Signale umzuwandeln, die für die störsichere Übertragung über größere Entfernungen geeignet sind. Besonders verbreitet sind Treiber- und Empfängerbausteine, die eine differentielle Übertragung digitaler Signale nach dem bekannten RS-485-Standard erlauben. Ebenfalls bekannt und vorteilhaft ist die Umwandlung der digitalen Schnittstellensignale in optische Signale, die über Lichtwellenleiter übertragen werden.

Welche Daten vom Positionsmessgerät 30 angefordert, bzw. zum Positionsmessgerät 30 gesendet werden, bestimmt in der Numerischen Steuerung 20 eine Steuereinheit 26, die über eine Applikationsschnittstelle 27, 28 mit dem Schnittstellencontroller 24 verbunden ist. Der Schnittstellencontroller 24 dient hierbei quasi als Übersetzungseinheit, die Kommunikationsbefehle der allgemeinen Applikationsschnittstelle 27, 28 in Schnittstellensignale der speziellen Master-Schnittstelle 22 der Numerischen Steuerung 20 umwandelt. Die Bereitstellung angeforderter Daten, bzw. die Verarbeitung empfangener Daten erfolgt im Positionsmessgerät 30 in einer Messeinheit 34.

Bei der Steuereinheit 26 handelt es sich um eine programmgesteuerte Einheit, insbesondere basierend auf einem Mikrocontroller oder Mikroprozessor. Beispiele für Funktionen der Steuereinheit 26 sind das Auslesen und Anzeigen von Positionswerten, sowie das Kontrollieren komplexer Regelkreise, indem sie von Messgeräten, z.B. Positionsmessgeräten 30, Istwerte anfordert und aus diesen Sollwerte zur Steuerung von Antrieben ermittelt.

Erfindungsgemäß ist an der Vorrichtung 10 wenigstens eine Sensorschnittstelle 300 vorgesehen. Die Sensorschnittstelle 300 kann als analoge Schnittstelle für den Anschluss eines analogen Sensors 310, oder als digitale Schnittstelle zum Anschluss eines digitalen Sensors 310 ausgeführt sein.

Handelt es sich bei der Sensorschnittstelle 300 um eine analoge Schnittstelle, so ist in der Vorrichtung 10 eine Sensordatenverarbeitungseinheit 320 vorgesehen, die die analogen Sensorsignale, also den Messwert des Sensors 310, in ein digitales Sensor-Datensignal S_M umwandelt. Hierzu sind in der Sensordatenverarbeitungseinheit 320 geeignete Mittel vorgesehen, beispielsweise ein A/D-Wandler.

Handelt es sich bei der Sensorschnittstelle 300 dagegen um eine digitale Schnittstelle, so resultiert das digitale Sensor-Datensignal S_M, das den Messwert des Sensors 310 umfasst, direkt aus dem angeschlossenen Sensor 310. Die Sensorschnittstelle 300 kann zwar prinzipiell vom selben Typ wie die Slave-Schnittstelle 12, bzw. die Master-Schnittstelle 18 sein, nachdem diese häufig aber auf eine höhere Komplexität und Datenübertragungsgeschwindigkeit aufweisen, als sie für die Übertragung von Sensordaten benötigt wird, können als Sensorschnittstelle 300 einfachere serielle Schnittstellen eingesetzt werden. Einige Beispiele für die Ausführung der Sensorschnittstelle 300 wären I2C-, SPI-, oder JTAG-Schnittstelle. Desweiteren sind auch drahtlose Schnittstellen verwendbar, etwa optisch nach dem IrDA-Standard oder via Funkstrecke nach dem Bluetooth- oder ZigBee-Standard. Ebenso kann die Sensorschnittstelle 300 als RFID-Lesegerät und der Sensor als RFID-Tag ausgestaltet sein.

Das digitale Sensor-Datensignal S_M ist der Schaltungsanordnung 15 zugeführt. Dabei können aktuelle Sensorwerte über das Sensor-Datensignal S_M unaufgefordert kontinuierlich, bzw. in kurzen Zeitintervallen, zur Schaltungsanordnung 15 übertragen werden, oder aber nur auf Anforderung der Schaltungsanordnung 15. Im letzteren Fall übernimmt die Schaltungsanordnung 15 die Steuerung der Sensorschnittstelle 300.

An der Vorrichtung 10 kann weiter eine Bedienschnittstelle 16 vorgesehen sein, an die mittels eines weiteren Schnittstellenkabels 45 eine Bedieneinheit 40 anschließbar ist. Die Bedienschnittstelle 16 kann sowohl zur Programmierung, als auch zur Steuerung der Funktionen der Schaltungsanordnung 15 dienen. Auch die Bedienschnittstelle 16 ist nicht auf eine bestimmte Schnittstellenvariante festgelegt, es kommen prinzipiell die gleichen Ausführungen in Frage, die auch für die Sensorschnittstelle 300 gewählt werden können.

In der Praxis ist es besonders vorteilhaft, wenn als Bedieneinheit 40 ein handelsüblicher Personal Computer, insbesondere ein Laptop oder Notebook eingesetzt wird. Derartige Geräte verfügen standardmäßig über USB- oder Ethernet-Schnittstellen, die ebenfalls als Bedienschnittstelle 16 geeignet sind. Anstelle einer separaten Bedieneinheit 40 besteht auch die Möglichkeit, die Vorrichtung 10 über eine zusätzliche Schnittstelle (nicht dargestellt) des Steuergeräts 20 zu bedienen.

Optional (nicht dargestellt) können in der Vorrichtung 10 noch Bedienelemente, beispielsweise als Tastenfeld ausgeführt, und eine Anzeigeeinheit in Form eines ein- oder mehrzeiligen Displays angeordnet sein, über die die Schaltungsanordnung 15 programmierbar und/oder bedienbar ist. Auf diese Weise können komplexe Bedienfunktionen, z.B. Auswahl des an die Sensorschnittstelle 300 angeschlossenen Sensors 310, Datenformat, Schnittstellenprotokoll etc., direkt an der Vorrichtung 10 ausgeführt werden, so dass die Vorrichtung als autarkes Gerät betreibbar ist.

Im vorliegenden Beispiel handelt es sich bei der Master-Schnittstelle 22 der Numerischen Steuerung 20 um eine EnDat-Schnittstelle. Demzufolge erfolgt die physikalische Datenübertragung, wie in der Eingangs erwähnten EP0660209B2 beschrieben, gemäß dem RS-485-Standard in Form von Differenzsignalen über zwei Leitungspaare, wobei das erste Leitungspaar zur bidirektionalen Übertragung von Daten und das zweite Leitungspaar zur unidirektionalen Übertragung eines Taktsignals dient. Die Übertragung der Daten erfolgt synchron zum Taktsignal. Für diese Schnittstelle müssen intern drei Schnittstellensignale verwaltet werden, ein Taktsignal TCLK, ein Dateneingangssignal DIN und ein Datenausgangssignal DOUT. Die Einstellung der Datenrichtung, also ob das Datenausgangssignal aktiv ausgegeben wird, erfolgt über ein Freigabesignal OEN, das entsprechend dem Datenübertragungsprotokoll geschaltet wird.

Im Folgenden werden Slave-Schnittstellensignale, die zur Kommunikation der Slave-Schnittstelle 12 der Vorrichtung 10 mit der Master-Schnittstelle 22 der Numerischen Steuerung 20 dienen, als Slave-Dateneingangssignal DIN_S, Slave-Datenausgangsignal DOUT_S, Slave-Taktsignal TCLK_S und Slave-Freigabesignal OEN_S bezeichnet. Analog dazu erfolgt die Kommunikation der Master-Schnittstelle 18 der Vorrichtung 10 mit der Slave-Schnittstelle 32 des Positionsmessgeräts 30 über Master-Schnittstellensignale, insbesondere über ein Master-Dateneingangssignal DIN_M, ein Master-Datenausgangsignal DOUT_M, ein Master-Taktsignal TCLK_M und ein Master-Freigabesignal OEN_M. Korrespondierende Schnittstellensignale sind jeweils Slave-Dateneingangssignal DIN_S und Master-Datenausgangssignal DOUT_M, Slave-Taktsignal TCLK_S und Master-Taktsignal TCLK_M, sowie Master-Dateneingangssignal DIN_M und Slave-Datenausgangssignal DOUT_S.

Figur 2 zeigt ein Blockschaltbild einer Schaltungsanordnung 15. Einer zentralen Protokolleinheit 100 sind protokollrelevante Schnittstellensignale, also Signale, die zur Erkennung und Verarbeitung des Datenübertragungsprotokolls geeignet sind, zugeführt. Im vorliegenden Beispiel sind das Slave-Dateneingangssignal DIN_S (zur Identifikation von Befehlen, die von der Numerischen Steuerung 20 an das Positionsmessgerät 30 gesendet werden), das Slave-Taktsignal TCLK_S (mit dem die Datenübertragung synchronisiert ist) protokollrelevante Schnittstellensignale. Ebenfalls protokollrelevant kann das Master-Dateneingangssignal DIN_M sein, beispielsweise dann, wenn der Protokollablauf von Antwortdaten des Positionsmessgeräts 30, bzw. vom Zeitpunkt des Eintreffens bestimmter Antwortdaten abhängt. In Abhängigkeit von der aktuellen Datenrichtung, die sich aus dem Protokollablauf ergibt, erzeugt die Protokolleinheit 100 auch das Slave-Freigabesignal OEN_S und das Master-Freigabesignal OEN_M. Darüber hinaus gibt die Protokolleinheit 100 auch das Master-Taktsignal TCLK_M über die Master-Schnittstelle 18 zum Positionsmessgerät 30 aus.

Weiter ist der Protokolleinheit 100 das Sensor-Datensignal S_M zugeführt. Zur Übertragung des Sensor-Datensignals S_M zur Protokolleinheit 100 ist jede beliebige digitale Datenübertragungsmethode geeignet, bevorzugt wird das Sensor-Datensignal S_M in Form eines digitalen seriellen Datenstroms zur Protokolleinheit 100 übertragen. Wie bereits oben erwähnt, können über das Sensor-Datensignal S_M unaufgefordert kontinuierlich, bzw. in kurzen Zeitintervallen, aktuelle Sensorwerte eintreffen, oder die Übertragung aktueller Sensorwerte von der Protokolleinheit 100 initiiert werden.

Neben der Protokolleinheit 100 umfasst die Schaltungsanordnung 15 eine Manipulationseinheit 110. Dieser ist an einem ersten Eingang das Master-Dateneingangssignal DIN_M und einem zweiten Eingang ein in der Protokolleinheit 100 aus dem Sensor-Datensignal S_M erzeugtes Sensor-Datenausgangssignal SOUT, sowie ggf. ein Korrekturdatensignal X zugeführt. An ihrem Ausgang gibt die Manipulationseinheit 110 das Slave-Datenausgangssignal DOUT_S in Richtung der Numerischen Steuerung 20 aus. Ein Umschalter 112 in der Manipulationseinheit 110 bestimmt, ob das Master-Dateneingangssignal DIN_M oder das Sensor-Ausgangsdatensignal SOUT, bzw. das Korrekturdatensignal X, als Slave-Datenausgangssignal DOUT_S ausgegeben wird. In anderen Worten wird mit dem Umschalter 112 eine Möglichkeit geschaffen, anstelle der über das Master-Dateneingangssignal DIN_M vom Positionsmessgerät 30 eintreffenden Daten, alternative Daten, insbesondere das Sensor-Datenausgangssignal SOUT, an die Numerische Steuerung 20 auszugeben.

Die Steuerung des Umschalters 112 erfolgt durch die Protokolleinheit 100. Sie ist mit Vorteil als zustandsgesteuerter Automat realisiert, der Informationen, insbesondere Befehle, die mit den protokollrelevanten Schnittstellensignalen von der Numerischen Steuerung 20 eintreffen, erkennt und in Abhängigkeit von diesen Informationen und nach vorgegebenen Manipulationsregeln die Steuerung des Umschalters 112 vornimmt.

Außerdem generiert die Protokolleinheit 100 aus dem Sensor-Datensignal S_M das Sensor-Datenausgangssignal SOUT, so dass sich dieses lückenlos in den als Slave-Ausgangsdatensignal DOUT_S ausgegebenen Datenstrom einfügt. Im beschriebenen Beispiel, in dem die Daten, die als Master-Dateneingangssignal DIN_M vom Positionsmessgerät 30 synchron zum Master-Taktsignal TCLK_M bei der Manipulationseinheit 110 eintreffen und als Slave-Ausgangsdatensignal DOUT_S in Richtung der Numerischen Steuerung 20 weitergeleitet werden, bedeutet das, dass von der Protokolleinheit 100 als Sensor-Datenausgangssignal SOUT eine Datensequenz generiert wird, die zur Ausgabe ebenfalls synchron zum Master-Taktsignal TCLK_M zur Manipulationseinheit 110 ausgegeben wird. Darüber hinaus können die zur Generierung des Sensor-Datenausgangssignals SOUT durchgeführten Operationen eine Konvertierung des Datenformats oder eine Anpassung der Auflösung des im Sensor-Datensignal S_M enthaltenden Sensorwerts umfassen.

Die Ausgabe des Sensor-Datenausgangssignals SOUT kann Inkonsistenzen des Slave-Ausgangsdatensignals DOUT_S hervorrufen, die in der Numerischen Steuerung 20 als Fehler interpretiert werden. Um derartige Inkonsistenzen zu beheben, ist in der Protokolleinheit 100 weiter ein Korrekturdatensignal X generierbar, das, ebenso wie das Sensor-Datenausgangssignal SOUT, der Manipulationseinheit 110 zuführbar und an Stelle des Master-Dateneingangssignals DIN_M als Slave-Datenausgangssignal DOUT_S zur Numerischen Steuerung 20 ausgebbar ist. An welcher Stelle der Datenübertragung das Korrekturdatensignal X ausgegeben wird, bestimmt die Protokolleinheit 100 wieder anhand der protokollrelevanten Schnittstellensignale, also beispielsweise dem Slave-Dateneingangssignal DIN_S, dem Slave-Taktsignal TCLK_S oder dem Master-Dateneingangssignal DIN_M.

Hierzu ein Beispiel: zur Sicherung der Datenübertragung, bzw. als Kontrollmöglichkeit, ob die Daten korrekt bei der Numerischen Steuerung 20 angekommen sind, wird vom Sender (dem Positionsmessgerät 30) häufig eine Prüfsumme CRC (Cyclic Redundancy Check) erzeugt und ebenfalls zur Numerischen Steuerung 20 übertragen. Wird nun der Datenstrom manipuliert und ein Teil der übertragenen Daten durch das Sensor-Datenausgangssignal SOUT ersetzt, so stimmt die Prüfsumme CRC nicht mehr mit den übertragenen Daten überein und die Numerische Steuerung 20 würde in dieser Inkonsistenz einen Fehler erkennen. Um dies zu verhindern, generiert die Protokolleinheit 100 in diesem Fall aus den im Master-Dateneingangssignal DIN_M enthaltenen Daten und dem Sensor-Ausgangsdatenwort SOUT eine neue Prüfsumme, die die geänderten Daten berücksichtigt und gibt diese als Korrekturdatensignal X anstelle der vom Positionsmessgerät 20 gesendeten Prüfsumme aus. Analog zur Ausgabe des Sensor-Datenausgangssignals SOUT erfolgt die Ausgabe des Korrekturdatensignals X synchron zum Master-Taktsignal TCLK_M.

Die Protokolleinheit 100 arbeitet synchron zu einem Arbeitstaktsignal CLK, das entweder in der Schaltungsanordnung 15 erzeugt, oder dieser von außen zugeführt wird. Da die Schnittstellensignale, die aus Richtung der Numerischen Steuerung 20 bei der Schaltungsanordnung 15 ankommen, in diesem Beispiel konkret das Slave-Taktsignal TCLK_S und das Slave-Dateneingangssignal DIN_S, asynchron zum Arbeitstaktsignal CLK sind, ist es von Vorteil, diese bereits am Eingang der Schaltungsanordnung 15 mittels Synchronisationseinheiten 102, 104 mit dem Arbeitstaktsignal CLK zu synchronisieren. Dabei werden diese Signale lediglich zeitlich verzögert, bleiben ansonsten aber weitgehend unverändert. Da dadurch auch die Antwortdaten des Positionsmessgeräts 30 verzögert bei der Numerischen Steuerung 20 eintreffen, wirkt sich eine derartige Verzögerung auf die Numerische Steuerung 20 wie die Verwendung längerer Schnittstellenkabel 13, 19 aus. Um die Schnittstellensignale verarbeiten zu können, muss das Arbeitstaktsignal CLK die gleiche oder eine höhere Frequenz als die maximal zu erwartende Frequenz des Slave-Taktsignals TCLK_S aufweisen. Grundsätzlich gilt, je höher die Frequenz des Arbeitstaktsignals CLK ist, desto geringer ist die zeitliche Verzögerung der Schnittstellensignale. Bei einer maximalen Frequenz des Slave-Taktsignals TCLK_S von 10 MHz hat sich in der Praxis eine Frequenz des Arbeitstaktsignals CLK im Bereich von 40 bis 100 MHz als günstig erwiesen.

Die Manipulationsregeln können beispielsweise fest in der Protokolleinheit 100 abgelegt sein. Besonders vorteilhaft ist es jedoch, einen Manipulationsspeicher 130 vorzusehen, dessen Inhalt über eine Kommunikationseinheit 140 programmierbar ist, die mit der Bedieneinheit 40 über die Bedienschnittstelle 16 kommuniziert. Im Manipulationsspeicher 130 kann abgelegt werden, welche der Befehle, die die Numerischen Steuerung 20 an die Positionsmesseinrichtung 30 sendet, dazu genutzt werden sollen, um das Sensor-Ausgangsdatensignal SOUT anstelle der eigentlich vom Positionsmessgerät 30 eintreffenden Daten zu übertragen. Auf diese Weise kann die Vorrichtung 10 flexibel an geänderte Anforderungen angepasst werden.

Als Schaltungsanordnung 15 kommt mit Vorteil ein programmierbarer Baustein zum Einsatz, beispielsweise ein FPGA (Field Programmable Gate Array). Derartige Bausteine können jederzeit neu programmiert werden und sind daher bestens geeignet, auf Änderungen und/oder Erweiterungen der Manipulationsmöglichkeiten einer erfindungsgemäßen Vorrichtung 10 zu reagieren. Ebenfalls besonders gut geeignet als Schaltungsanordnung 15 sind Mikrocontroller, da auch sie einfach umzuprogrammieren und an geänderte Bedingungen anzupassen sind. Die Programmierung der Schaltungsanordnung 15 kann beispielsweise ebenfalls über die Bedienschnittstelle 16 erfolgen.

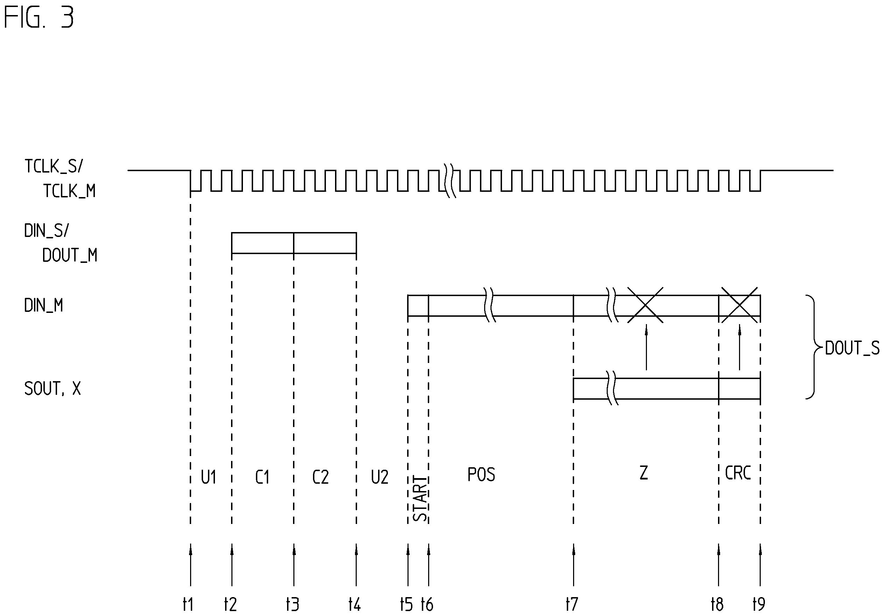

Figur 3 zeigt eine vereinfachte Datenübertragungssequenz zur Veranschaulichung der Funktionsweise einer erfindungsgemäßen Vorrichtung 10. Insbesondere wurde darauf verzichtet, geringe zeitliche Verzögerungen, hervorgerufen durch die Verarbeitung, bzw. Synchronisierung der Schnittstellensignale in der Schaltungsanordnung 15, darzustellen. Gezeigt ist die Übertragung eines speziellen Positionsanforderungsbefehls von der Numerischen Steuerung 20 zum Positionsmessgerät 30, worauf das Positionsmessgerät 30 aktuelle Positionsdaten POS und Zusatzdaten Z zur Numerischen Steuerung 20 sendet. Bei den Zusatzdaten kann es sich beispielsweise um Daten aus einem Speicher im Positionsmessgerät 30 handeln. Zur Erhöhung der Übertragungssicherheit ist zum einen der Positionsanforderungsbefehl redundant ausgelegt, insbesondere besteht er aus einem ersten Befehlsblock C1 und einem zweiten Befehlsblock C2, die beispielsweise aus je 3 Bits bestehen, wobei der zweite Befehlsblock C2 lediglich den ersten Befehlsblock C1 identisch oder invertiert wiederholt. Zum anderen sendet das Positionsmessgerät 30 abschließend eine Prüfsumme CRC.

Als Manipulationsregel für den oben beschriebenen Positionsanforderungsbefehl ist in der Vorrichtung 10 hinterlegt, dass an Stelle der Zusatzdaten Z ein Temperaturwert eines Temperatursensors, der als Sensor 310 an die Sensorschnittstelle 300 angeschlossen ist, zur Numerischen Steuerung 20 übertragen werden soll. Die Manipulationsregel bestimmt somit, zu welchem Zeitpunkt die Manipulationseinheit 110 umgeschaltet werden muss, um als Slave-Datenausgangssignal DOUT_S anstatt des Master-Dateneingangssignals DIN_M das Sensor-Datenausgangssignal SOUT und eine entsprechend geänderte Prüfsumme CRC auszugeben.

Es sei an dieser Stelle ausdrücklich darauf hingewiesen, dass Manipulationsregeln nicht zwingend Befehlen zugeordnet sein müssen, die im Rahmen des Datenübertragungsprotokolls von der Numerischen Steuerung 20 zum Positionsmessgerät 30 geschickt werden. Es kann vielmehr jeder beliebigen Information, die von der Numerischen Steuerung 20, oder auch vom Positionsmessgerät 30 bei der Vorrichtung 10, bzw. der Schaltungsanordnung 100 eintrifft, eine Manipulationsregel zugeordnet sein. Im einfachsten Fall kann bereits das Einsetzen des Taktsignals, also der Beginn einer Datenübertragung, als Information gewertet werden, der eine Manipulationsregel zugeordnet ist.

Die erste Zeile der in Figur 3 dargestellten Datenübertragungssequenz zeigt das von der Numerischen Steuerung 20 bei der Schaltungsanordnung 15 eintreffende Slave-Taktsignal TCLK_S, bzw. das (unter Vernachlässigung einer Verzögerung) von der Schaltungsanordnung 15 an das Positionsmessgerät 30 weitergeleitete Master-Taktsignal TCLK_M.

Die zweite Zeile zeigt das Slave-Dateneingangssignal DIN_S, das die Befehlsblöcke C1 und C2 umfasst, und, ggf. nach Synchronisation mit dem Arbeitstaktsignal CLK in der Synchronisationseinheit 102, als Master-Datenausgangssignal DOUT_M in Richtung des Positionsmessgeräts 30 weitergeleitet wird.

In der dritten Zeile ist das Master-Dateneingangssignal DIN_M dargestellt, das die Antwortdaten des Positionsmessgeräts 30 enthält.

Die vierte Zeile zeigt schließlich Sensor-Datenausgangssignal SOUT und ein Korrekturdatensignal X, die von der Protokolleinheit 100 erzeugt werden, ersteres aus dem Sensor-Datensignal S_M, letzteres aus dem gesamten, zur Numerischen Steuerung 20 gesendeten Datenstrom.

Der zeitliche Ablauf gestaltet sich wie folgt:
Nach dem Aktivieren des Slave-Taktsignals TCLK_S findet zuerst eine Umschaltung der Datenrichtung statt. Unter der Annahme, dass im Ruhezustand das Slave-Freigabesignal OEN_S aktiv und das Master-Freigabesignal OEN_M passiv geschaltet ist, schaltet die Protokolleinheit 100 in einem ersten Umschaltzeitraum U1 zwischen den Zeitpunkten t1 und t2 zuerst das Slave-Freigabesignal OEN_S passiv und dann das Master-Freigabesignal OEN_M aktiv. Die Umschaltung erfolgt zeitlich gestaffelt, um Datenkollisionen zu vermeiden.

Ab dem Zeitpunkt t2 folgt die Übertragung des ersten Befehlsblocks C1, gefolgt, ab dem Zeitpunkt t3, vom zweiten Befehlsblock C2.

Die Übertragung des zweiten Befehlsblocks C2 ist zum Zeitpunkt t4 beendet, die Protokolleinheit 100 kann nun durch Vergleich der Befehlsblöcke C1, C2 feststellen, ob die Übertragung des Befehls fehlerfrei war.

Spätestens zum Zeitpunkt t4 hat die Protokolleinheit 100 ausreichend Informationen, um feststellen zu können, ob eine Manipulation von Schnittstellensignalen vorgenommen werden soll, d.h. ob für diesen Befehl, wie in diesem Beispiel, eine Manipulationsregel vorliegt. Die Manipulationsregel ist beispielsweise in der Protokolleinheit 100 definiert, oder im Manipulationsspeicher 130 abgespeichert.

Auf die Übertragung des Befehls folgt ab dem Zeitpunkt t4 bis zum Zeitpunkt t5 ein zweiter Umschaltzeitraum U2 in dem die Datenrichtung umgeschaltet wird, insbesondere schaltet die Protokolleinheit das Master-Freigabesignal OEN_M passiv und das Slave-Freigabesignal OEN_S aktiv.

Ab dem Zeitpunkt t5 beginnt die Übertragung der Antwortdaten vom Positionsmessgerät 30 zur Numerischen Steuerung 20, wobei zuerst eine Startsequenz START gesendet wird, die beispielsweise aus einem Startbit, gefolgt von diversen Statusbits, die Rückschlüsse auf den Betriebszustand des Positionsmessgeräts 30 erlauben, besteht.

Auf die Startsequenz START folgend wird ab dem Zeitpunkt t6 der Positionswert POS übertragen.

Entsprechend der Manipulationsregel für den vorliegenden Befehl schaltet die Protokolleinheit 100 zum Zeitpunkt t7 das Schaltelement 112 in der Manipulationseinheit 110 um, so dass ab diesem Zeitpunkt das Sensor-Datenausgangssignal SOUT, das von der Protokolleinheit 100 aus dem Sensor-Datensignal S_M generiert wird, anstelle des Master-Dateneingangssignals DIN_M als Slave-Datenausgangssignal DOUT_S zur Numerischen Steuerung 20 ausgegeben wird.

Ab dem Zeitpunkt t8 schließt sich unmittelbar die Übertragung der Prüfsumme CRC an, das Schaltelement 112 bleibt in umgeschalteter Position und die Protokolleinheit 100 gibt die an die geänderten Daten angepasste Prüfsumme CRC als Korrekturdatenwort X aus.

Zum Zeitpunkt t9 ist die Datenübertragung beendet und die Protokolleinheit 100, sowie die Manipulationseinheit 112 gehen in den Ausgangszustand zurück.

Wie das in Verbindung mit Figur 3 beschriebene Beispiel für eine Manipulation des Datenverkehrs zwischen der Masterschnittstelle 22 einer Numerischen Steuerung 20 und der Slave-Schnittstelle eines Positionsmessgeräts 30 zeigt, bietet eine erfindungsgemäße Vorrichtung 10, bzw. eine Schaltungsanordnung 15 eine einfache und effektive Möglichkeit, Messdaten eines Sensors 310 in eine vorhandene Schnittstellenkommunikation einzukoppeln. Besonders vorteilhaft ist es, dass hierfür weder die Numerische Steuerung 20, noch das Positionsmessgerät 30 verändert werden müssen.

## Patentansprüche

1. Vorrichtung zur Übertragung von Sensordaten, mit
• einer Slave-Schnittstelle (12), die an eine Master-Schnittstelle (22) eines Steuergeräts (20) anschließbar ist,
• einer Master-Schnittstelle (18), die an eine Slave-Schnittstelle (32) eines Messgeräts (30) anschließbar ist,
• wenigstens einer Sensorschnittstelle (300), an die ein Sensor (310) anschließbar ist **dadurch gekennzeichnet dass** die Vorrichtung eine Schaltungsanordnung (15) enthält, umfassend eine Manipulationseinheit (110) und eine Protokolleinheit (100),
wobei
der Manipulationseinheit (110) ein Master-Dateneingangssignal (DIN_M) der Master-Schnittstelle (18) und ein Sensor-Datenausgangssignal (SOUT) zuführbar sind und dass die Manipulationseinheit ausgebildet ist ein Slave-Datenausgangssignal (DOUT_S) zur Slave-Schnittstelle (12) auszugeben und
• der Protokolleinheit (100) wenigstens ein protokollrelevantes Schnittstellensignal (DIN_S, TCLK_S, DIN_M) der Slave-Schnittstelle (12) oder der Master-Schnittstelle (18), sowie ein Sensor-Datensignal (S_M) der Sensorschnittstelle (300) zuführbar sind und von der Protokolleinheit (100) aus dem Sensor-Datensignal (S_M) das Sensor-Datenausgangssignal (SOUT) generierbar ist und anhand von Manipulationsregeln und dem wenigstens einen protokollrelevanten Schnittstellensignal (DIN_S, TCLK_S, DIN_M) auswählbar ist, wann die Manipulationseinheit (110) als Slave-Datenausgangssignal (DOUT_S) das Master-Dateneingangssignal (DIN_M) der Master-Schnittstelle (18) oder das Sensor-Datenausgangssignal (SOUT) ausgibt.

2. Vorrichtung nach Anspruch 1, wobei an die Sensorschnittstelle (300) ein digitaler Sensor (310) anschließbar ist.

3. Vorrichtung nach Anspruch 1, wobei an die Sensorschnittstelle (300) ein analoger Sensor (310) anschließbar ist und weiter eine Sensorsignalverarbeitungseinheit (320) vorgesehen ist, in der aus dem Sensorsignal des analogen Sensors (310) das Sensor-Datensignal (S_M) erzeugbar ist.

4. Vorrichtung nach einem der vorhergehenden Ansprüche, wobei zur Behebung von Inkonsistenzen des Slave-Datenausgangssignals (DOUT_S), hervorgerufen durch die Ausgabe des Sensor-Datenausgangssignals (SOUT), in der Protokolleinheit (100) weiter ein Korrekturdatenwort (X) generierbar, der Manipulationseinheit (110) zuführbar und in Abhängigkeit des wenigstens einen protokollrelevanten Schnittstellensignals (DIN_S, TCLK_S, DIN_M) als Slave-Datenausgangssignal (DOUT_S) ausgebbar ist.

5. Vorrichtung nach einem der vorhergehenden Ansprüche, wobei die Vorrichtung (10) weiter eine Bedienschnittstelle (16) umfasst, an die eine Bedieneinheit (40) anschließbar ist und über die die Schaltungsanordnung (15) programmierbar und/oder bedienbar ist.

6. Vorrichtung nach einem der vorhergehenden Ansprüche, wobei in der Schaltungsanordnung (15) weiter ein Manipulationsspeicher (130) vorgesehen ist, in dem Manipulationsregeln speicherbar sind.

7. Vorrichtung nach Anspruch 6, wobei der Manipulationsspeicher (130) über die Bedienschnittstelle (16) beschreibbar ist.

## Claims

1. Apparatus for transmitting sensor data, having
• a slave interface (12) which can be connected to a master interface (22) of a control device (20),
• a master interface (18) which can be connected to a slave interface (32) of a measuring device (30),
• at least one sensor interface (300) to which a sensor (310) can be connected,
**characterized in that** the apparatus contains a circuit arrangement (15) comprising a manipulation unit (110) and a protocol unit (100), wherein a master data input signal (DIN_M) from the master interface (18) and a sensor data output signal (SOUT) can be supplied to the manipulation unit (110), and **in that** the manipulation unit is designed to output a slave data output signal (DOUT_S) to the slave interface (12), and
• at least one protocol-relevant interface signal (DIN_S, TCLK_S, DIN_M) from the slave interface (12) or from the master interface (18) and a sensor data signal (S_M) from the sensor interface (300) can be supplied to the protocol unit (100), and the protocol unit (100) can generate the sensor data output signal (SOUT) from the sensor data signal (S_M) and, on the basis of manipulation rules and the at least one protocol-relevant interface signal (DIN_S, TCLK_S, DIN_M), can choose when the manipulation unit (110) outputs the master data input signal (DIN_M) from the master interface (18) or the sensor data output signal (SOUT) as the slave data output signal (DOUT_S).

2. Apparatus according to Claim 1, wherein a digital sensor (310) can be connected to the sensor interface (300) .

3. Apparatus according to Claim 1, wherein an analogue sensor (310) can be connected to the sensor interface (300), and a sensor signal processing unit (320) is also provided, in which sensor signal processing unit the sensor data signal (S_M) can be generated from the sensor signal from the analogue sensor (310) .

4. Apparatus according to one of the preceding claims, wherein, in order to eliminate inconsistencies in the slave data output signal (DOUT_S) caused by outputting the sensor data output signal (SOUT), a correction data word (X) can also be generated in the protocol unit (100), can be supplied to the manipulation unit (110) and can be output as the slave data output signal (DOUT_S) on the basis of the at least one protocol-relevant interface signal (DIN_S, TCLK_S, DIN_M).

5. Apparatus according to one of the preceding claims, wherein the apparatus (10) also comprises an operating interface (16), to which an operating unit (40) can be connected and which can be used to program and/or operate the circuit arrangement (15).

6. Apparatus according to one of the preceding claims, wherein a manipulation memory (130) is also provided in the circuit arrangement (15) and can store manipulation rules.

7. Apparatus according to Claim 6, wherein the manipulation memory (130) can be written to via the operating interface (16).

## Revendications

1. Dispositif de transmission de données de capteur, comprenant
- une interface esclave (12) pouvant être connectée à une interface maîtresse (22) d'un appareil de commande (20),
- une interface maîtresse (18) pouvant être connectée à une interface esclave (32) d'un appareil de mesure (30),
- au moins une interface de capteur (300) à laquelle peut être connecté un capteur (310), **caractérisé en ce que** le dispositif contient un montage de circuit (15) comprenant une unité de manipulation (110) et une unité de protocole (100),
dans lequel un signal d'entrée de données maître (DIN_M) de l'interface maîtresse (18) et un signal de sortie de données de capteur (SOUT) peuvent être transmis à l'unité de manipulation (110), et **en ce que** l'unité de manipulation est conçue pour délivrer un signal de sortie de données esclave (DOUT_S) à l'interface esclave (12), et
- au moins un signal d'interface relatif au protocole (DIN_S, TCLK_S, DIN_M) de l'interface esclave (12) ou de l'interface maîtresse (18), et un signal de données de capteur (S_M) de l'interface de capteur (300) peuvent être transmis à l'unité de protocole (100) et le signal de données de capteur (SOUT) peut être généré à partir du signal de données de capteur (S_M) par l'unité de protocole (100) et peut être sélectionné sur la base de règles de manipulation et de l'au moins un signal d'interface relatif au protocole (DIN_S, TCLK_S, DIN_M) lorsque l'unité de manipulation (110) délivre le signal d'entrée de données maître (DIN_M) de l'interface maîtresse (18) ou le signal de sortie de données de capteur (SOUT) en tant que signal de sortie de données esclave (DOUT_S).

2. Dispositif selon la revendication 1, dans lequel un capteur numérique (310) peut être connecté à l'interface de capteur (300).

3. Dispositif selon la revendication 1, dans lequel un capteur analogique (310) peut être connecté à l'interface de capteur (300) et dans lequel il est en outre prévu une unité de traitement de signal de capteur (320) dans laquelle le signal de données de capteur (S_M) peut être généré à partir du signal de capteur du capteur analogique (310).

4. Dispositif selon l'une des revendications précédentes, dans lequel, pour éliminer les incohérences du signal de sortie de données esclave (DOUT_S) provoquées par la sortie du signal de sortie de données de capteur (SOUT), un mot de données de correction (X) peut également être généré dans l'unité de protocole (100), transmis à l'unité de manipulation (110) et délivré en tant que signal de sortie de données esclave (DOUT_S) en fonction de l'au moins un signal d'interface relatif au protocole (DIN_S, TCLK_S, DIN_M).

5. Dispositif selon l'une des revendications précédentes,
dans lequel le dispositif (10) comprend en outre une interface de commande (16) à laquelle une unité de commande (40) peut être connectée et par l'intermédiaire de laquelle le montage de circuit (15) peut être programmé et/ou commandé.

6. Dispositif selon l'une des revendications précédentes, dans lequel il est en outre prévu dans le montage de circuit (15) une mémoire de manipulation (130) dans laquelle des règles de manipulation peuvent être stockées.

7. Dispositif selon la revendication 6, dans lequel la mémoire de manipulation (130) est accessible en écriture par l'intermédiaire de l'interface de commande (16).
